Europäisches Patentamt

European Patent Office

Office européen des brevets

(19)

(11) Veröffentlichungsnummer: **0 185 336**
**A2**

(12) ## EUROPÄISCHE PATENTANMELDUNG

(21) Anmeldenummer: 85115981.4

(22) Anmeldetag: 14.12.85

(51) Int. Cl.⁴: **B 62 D 55/088**

(30) Priorität: 18.12.84 DE 3446070

(43) Veröffentlichungstag der Anmeldung:
25.06.86 Patentblatt 86/26

(84) Benannte Vertragsstaaten:
BE DE FR GB IT SE

(71) Anmelder: Parker-Prädifa GmbH
Arnold-Jäger-Strasse 1
D-7120 Bietigheim-Bissingen(DE)

(72) Erfinder: Hörl, Ernst, Ing.
Wolfsbergweg 37
D-7121 Freudental(DE)

(74) Vertreter: Wolff, Michael, Dipl.-Phys.
Kirchheimer Strasse 69
D-7000 Stuttgart 75(DE)

(54) Dichtungsanordnung für Spurkettengelenke von Kettenfahrzeugen.

(57) Um bei einer Dichtungsanordnung für ein Kettengelenk, das mittels von vier sich paarweise überlappenden Laschen (18 und 20) und einer die zwei inneren Laschen (30) fest verbindenden Hülse (26) sowie eines die zwei äußeren Laschen (18) fest verbindenden Bolzens (22) in der Spiel gebenden geschmierten Bohrung der Hülse gebildet ist, wobei jede äußere Lasche (18) innen eine Vertiefung (12) aufweist, die einen auf dem Bolzen (22) sitzenden Distanzring (44), der mit der Grundfläche (36) der Vertiefung und der gegenüberliegenden Stirnfläche (42) je einen Ringspalt (46 bzw. 48) bildet, und einen ringförmigen Dichtungskörper (56) mit L-Profil aufnimmt, der mit einem Schenkel (62) den äußeren Spalt (46) gegen die Vertiefung (12) statisch abdichtet und mit dem anderen Schenkel (64) den inneren Spalt (48) gegen die Stirnfläche (42) dynamisch abdichtet, für den realen Fall des endseitigen Verschleißes des Distanzringes (44) eine Verzögerung des Beginns der Leckage zu bewirken, wird vorgeschlagen, als Dichtungskörper (56) eine ausschließlich radial dichtende, axial bewegliche, kippbare Einheit aus einem starren Tragteil (58) und einem elastischen Dichtteil (60) zwischen der Laschen (12)-Vertiefung (12) und einer Ringnut (50) in der Hülsen (26)-Stirnfläche (42) vorzusehen, wobei der Tragteil (58) und der Dichtteil (60) je eine der zwei umlaufenden Nut (50)-Innenflächen (54 bzw. 52) längs einer Kreislinie berühren bzw. beaufschlagen, während der statische Dichtteil (60) an der Vertiefungs (12)-Innenfläche (40) angreift.

./...

EP 0 185 336 A2

Fig.1

## DICHTUNGSANORDNUNG
### für Spurkettengelenke von Kettenfahrzeugen

Die Erfindung betrifft eine Dichtungsanordnung für Spurkettengelenke an Kettenfahrzeugen, bei denen vier paarweise nebeneinander angeordnete, sich paarweise überlappende Kettenlaschen sowie eine die im Überlappungsbereich axial innenliegenden Laschenenden fest verbindende Kettenhülse und ein die im Überlappungsbereich axial außenliegenden Kettenglieder fest verbindender, koaxialer Kettenbolzen ein Kettengelenk bilden, das aus einer mit Schmiermittel füllbaren Bohrung im Bolzen über eine radiale Bohrung im Bolzen schmierbar ist, wobei jede im Überlappungsbereich außenliegende Lasche auf ihrer Innenseite eine kreiszylindrische Vertiefung zur Aufnahme einer Dichtung und eines auf dem aus der Hülse herausragenden Bolzenende sitzenden starren Distanzringes aufweist, wobei der in einer radialen Ebene liegenden Grundfläche der Vertiefung eine normalerweise in einer parallelen Ebene liegende Stirnfläche der der Vertiefung benachbarten Kettenhülse gegenüberliegt und wobei zwei sich überlappende Laschen einen Ringspalt bilden, der den von der Vertiefung und der ihr axial gegenüberliegenden Stirnfläche begrenzten Hohlraum radial öffnet; mit einem ringförmigen Dichtungskörper im wesentlichen L-förmigen Profils, dessen zwei Schenkel zur statischen bzw. dynamischen Abdichtung der zwischen Distanzring einerseits sowie Grundfläche der Vertiefung bzw. Stirnfläche der Kettenhülse andererseits bestehenden Ringspalte unter Haft- bzw. Gleitreibschluß an der zylindrischen Umfangsfläche    der Vertiefung bzw. an der Kettenhülse anliegt.
Um bei einer solchen Dichtungsanordnung mit einem Dichtungskörper, bestehend aus einem statisch dichtenden weicheren Vollring und aus einem härteren verschleißfesteren Flanschring, der an der zylindrischen Umfangsfläche der Vertiefung anliegt und gegen die Stirnfläche der Kettenhülse bei der Gelenkbeanspruchung dynamisch dichtet, wobei der Flanschring den Vollring axial sowie radial stützt, die Dichtwirkung zu verbessern und den axialen Federweg des Dichtungskörpers zu vergrößern, ist in der DE-OS 33 21 152 (Prädifa) vorgeschlagen, die Anordnung so zu treffen, daß der Vollring zwischen der Grundfläche der Vertiefung und dem dynamisch dichtenden Flansch des Flanschringes axial eingespannt ist, und daß der den Vollring axial außen stützende Flansch des Flanschringes einen gewissen Abstand zur Grundfläche der Vertiefung aufweist sowie einen Preßsitz in deren zylindrischer Umfangsfläche einnimmt.

An dieser im wesentlichen nur axial dichtenden Dichtungsanordnung ist ebenso wie beispielsweise bei der insoweit gleichartigen Dichtungsanordnung gemäß DE-OS 28 08 159 nachteilig, daß ein durch Reibung an der Stirnfläche der Kettenhülse und an der axial gegenüberliegenden Vertiefungsgrundfläche verursachter Verschleiß des Distanzringes auf dem Kettenbolzen infolge Gelenkbeanspruchung allmählich zu einer zu großen axialen Annäherung der Hülsenstirnfläche und der Vertiefungsgrundfläche führt, welche auf der axial gegenüberliegenden Gelenkseite eine entsprechend große axiale Entfernung der gleichen Flächen voneinander mit sich bringt. Schließlich reicht der maximale Federweg des Dichtungskörpers nicht mehr aus, um die Dichtwirkung aufrechtzuerhalten. Es kommt dann zur Leckage mit austretendem Öl und eintretendem Schmutz, wodurch das Kettengelenk zerstört wird, wenn der verschlissene Distanzring nicht rechtzeitig ausgewechselt wird, wozu eine Demontage des Kettengelenkes erforderlich ist.

Der Erfindung liegt daher die Aufgabe zugrunde, eine Dichtungsanordnung zu schaffen, deren Verwendung bei unvermeidlichem Verschleiß des Ringes, der die Hülsenstirnfläche und die Vertiefungsgrundfläche auf Distanz hält, nicht zu einer zu frühen Leckage führt, wenn der Verschleiß des Distanzringes fortschreitet.

Zur Lösung dieser Aufgabe geht die Erfindung von dem Grundgedanken aus, sowohl die dynamische als auch die statische Abdichtung des Kettengelenkes nicht mehr axial,sondern rein radial vorzunehmen, um trotz verschleißbedingter axialer Veränderung der Dichtungsanordnung deren radiale Wirksamkeit unbeeinträchtigt zu lassen.

Dementsprechend ist die der Erfindung zugrundeliegende Aufgabe erfindungsgemäß dadurch gelöst, daß der Dichtungskörper eine ausschließlich radial dichtende, axial bewegliche, kippbare Einheit aus einem starren Tragteil und mindestens einem elastischen Dichtteil bildet und mit axialem Spiel zwischen der kreisringförmigen Grundfläche der Vertiefung und der kreisringförmigen Grundfläche einer in die Stirnfläche der Kettenhülse versenkten, den dynamisch abdichtenden Schenkel des Dichtungskörpers aufnehmenden Ringnut mit zwei einander radial gegenüberliegenden Innenflächen angeordnet ist; und daß der Tragteil des Dichtungskörpers eine der beiden Innenflächen der Ringnut im wesentlichen nur längs einer Kreislinie berührt, während an einer dieser ungefähr radial gegenüberliegenden Stelle des Dichtungskörpers dessen dynamisch abdichtender Dichtteil die andere der beiden Innenflächen beaufschlagt; wobei der statisch abdichtende Schenkel des Dichtungskörpers mit dessen statisch abdichtendem Dichtteil an der zylindrischen Umfangsfläche der Vertiefung angreift.

Dadurch wird vorteilhafterweise erreicht, daß die statische und dynamische Abdichtung über bezüglich der Achse des Gelenkbolzens normalerweise koaxiale Grenzflächen erfolgt, deren achsparallele Verschiebung die radiale Abdichtung nicht im mindesten beeinträchtigt. Wenn also der Distanzring endseitig verschleißt, wird zwar der axiale Spielraum des dem axial gegenüberliegenden Distanzring zugeordneten Dichtungskörpers vergrößert, jedoch keine Trennung des Dichtungskörpers von Gelenkflächen im Bereich der Dichtflächen hervorgerufen.

Bei bevorzugten Ausführungsformen der erfindungsgemäßen Dichtungsanordnung ist die Ringnut in der Kettenhülse radial außerhalb des Distanzringes angeordnet und berührt bzw. beaufschlagt der Trag- sowie der Dichtteil des Dichtungskörpers mit dessen dynamisch abdichtendem Schenkel die radial innere bzw. äußere der beiden Innenflächen der Ringnut. Infolgedessen liegt die Kreislinie, längs deren sich der Tragteil des Dichtungskörpers und die Nutwandung berühren, zwischen der ringförmigen dynamischen Dichtfläche, über welche sich der dynamisch dichtende Dichtteil des Dichtungskörpers und die Nutwandung berühren, und dem Ringspalt zwischen Distanzhülse und Hülsenstirnfläche als Berandung der Ringnut, sodaß zwar Öl, nicht jedoch Schmutz an die gemeinsame Berührungslinie des Tragteiles des Dichtungskörpers und der Ringnut an diejenige Stelle herangeführt wird, welche das Kippen des Dichtungskörpers relativ zur Kettenhülse ermöglicht.

Bei einer ersten und zweiten der bevorzugten Ausführungsformen weist der Tragteil des Dichtungskörpers ein J- bzw. angenähert U-förmiges Querschnittsprofil auf, wobei sein axial inneres Ende eine Krümmung bzw. Abwinklung besitzt, die das axial innere Ende des dynamisch abdichtenden Dichtteiles an dessen axial innerer Seite abstützt. Dadurch ist der dynamisch abdichtende Dichtteil des Dichtungskörpers vorteilhaft armiert.

Das gilt auch für den statisch abdichtenden Dichtteil des Dichtungskörpers der zweiten Ausführungsform, wo der z.B. U-förmig profilierte Tragteil des Dichtungskörpers an seinem axial äußeren Ende eine Abwinklung besitzt, die in die axial äußere, radial innere Ecke des statisch dichtenden Dichtteiles eingreift.

Bei der ersten/und zweiten der bevorzugten Ausführungsformen ist der statisch abdichtende Dichtteil des Dichtungskörpers mit auf seinen Kreisumfang verteilten Vorsprüngen axial nach außen versehen, die der kreisförmigen Grundfläche der Vertiefung gegenüberstehen. Damit erhält der Dichtungskörper axial einseitig einen Anschlag, der eine Strömung radial verdrängter Luft zuläßt.

Bei einer dritten der bevorzugten Ausführungsformen weist der
Tragteil des Dichtungskörpers zwei umlaufende,zumindest radial offene
Nuten zur Aufnahme je eines O-Ringes als Dichtteilen des Dichtungskörpers auf, welche dynamisch bzw. statisch dichten.
Diese Ausführungsform ist besonders einfach herstellbar.

Bei den bevorzugten Ausführungsformen bestehen der Trag- und
der Dichtteil des Dichtungskörpers aus Metall bzw. aus einem
elastomeren Kunststoffmaterial, welche die benötigte Steifigkeit bzw. Verschleißarmut besitzen.

-6-

0185336

Im folgenden ist die Erfindung anhand der drei durch die Zeichnung beispielhaft dargestellten bevorzugten Ausführungsformen der erfindungsgemäßen Dichtungsanordnung im einzelnen erläutert. Die Zeichnung zeigt in drei Figuren je eine der drei Ausführungsformen in einem axialen Längsschnitt.

In allen drei Ausführungsbeispielen ist ein Dichtungskörper zum Einbau in einen kreisringförmigen Hohlraum 10 bestimmt und geeignet, welcher annähernd mit einer kreiszylindrischen Vertiefung 12 der axial inneren Stirnfläche 14 des axial äußeren Endes 16 einer Kettenlasche 18 übereinstimmt, welches unter Preßpassung auf einem Ende 20 eines Kettenbolzens 22 festsitzt, der mit seinem Ende 20 aus einem Ende 24 einer Kettenhülse 26 herausragt, in welcher sich der Bolzen unter Gleitpassung dreht. Das Hülsenende 24 selbst sitzt unter Preßpassung fest auf dem axial inneren Ende 28 einer anderen Kettenlasche 30, welches eine axial äußere Stirnfläche 32 aufweist, die mit der Stirnfläche 14 einen in die Vertiefung 12 und damit in den Hohlraum 10 mündenden Ringspalt 34 bildet. Die Vertiefung 12 ist axial nach außen durch eine ebene ringförmige Grundfläche 36, radial nach außen durch eine ringförmige,bezüglich der Achse 38 des Bolzens 22 koaxiale Umfangsfläche 40 und radial nach innen durch den Bolzen selbst begrenzt. Der Hohlraum 10, der durch das Eingreifen des Hülsenendes 24 in die Vertiefung 12 etwas kleiner ist als diese, ist ebenfalls durch die Grundfläche 36 und die Umfangsfläche 40, aber außerdem durch die schon in der Vertiefung liegende axial äußere Stirnfläche 42 des Hülsenendes und durch einen kreiszylindrischen Distanzring 44 begrenzt, der beim Aufpressen des Laschenendes 28 und des Laschenendes 16 auf das Hülsenende 24 bzw. auf das Bolzenende 20 einen definierten senkrechten Abstand zwischen den in parallelen, bezüglich der Bolzenachse 38 radialen Ebenen liegenden Flächen 36 und 42 einstellt. Senkrecht zu seiner Stirnfläche 42 ist in das Hülsenende 24 eine bezüglich der Bolzenachse 38 koaxiale Ringnut 50 mit zwei konzentrischen Innenflächen 52 und 54 so eingearbeitet, daß die radial innere Innenfläche 54 einen größeren Durchmesser hat als der Außenumfang des Distanzringes 44.

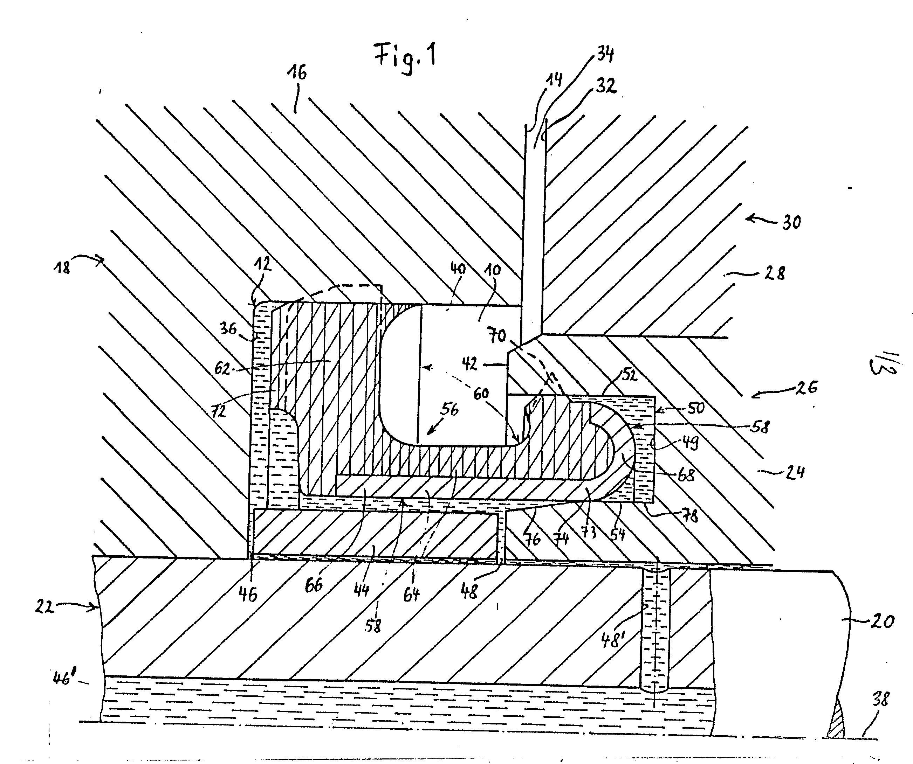

Im ersten Ausführungsbeispiel ist ein kreisringförmiger Dichtungskörper 56 vorhanden, dessen in Fig. 1 gezeichnetes Querschnittsprofil Ähnlichkeit mit einem gestiefelten Schlittschuh hat. Dieser Dichtungskörper 56 besteht aus einem starren Tragteil 58 in Form eines J-förmig profilierten Metallringes und einem elastischen Dichtteil 60 aus einem Elastomer wie Polyurethan. Der Dichtungskörper 56 weist zwei zur Bildung seines L-förmigen Profils rechtwinklig ineinanderübergehende Schenkel auf, von denen der sich radial erstreckende Schenkel 62 ausschließlich von dem Dichtteil 60 gebildet ist, während der sich axial erstreckende Schenkel 64 sowohl von dem Dichtteil 60 als auch von dem Tragteil 58 gebildet ist, welches den auf den axialen Schenkel entfallenden Abschnitt des Dichtteiles 60 dadurch armiert, daß sein kreiszylindrischer Abschnitt 66 auf der radialen Innenseite des Dichtungskörpers 56 und sein axial innerer Abschnitt 68 mit ungefähr halbkreisförmigem Profil derart in den Dichtteil 60 eingebettet sind, daß sie bündig in diesen übergehen und einen Teil der Oberfläche des Dichtungskörpers 56 anstelle des Dichtteiles bilden. An das freie Ende des gekrümmten Tragteilabschnittes 68, der in der Ringnut 50 angeordnet ist, schließt eine an dem Dichtteil 60 ausgeformte, radial nach außen vorspringende, dynamisch dichtende Lippe 70 an, die mit gestrichelter Linie im unbelasteten Zustand gezeichnet ist. Das gilt auch für den freien Rand des aus dem Dichtteil 60 gebildeten radialen Schenkels 62 des Dichtungskörpers 56, welcher dank eines Übermaßes an die zylindrische Umfangsfläche 40 der Vertiefung 12 in der Kettenlasche 18 gepreßt ist, sodaß sich dort eine statische Abdichtung ergibt und der Dichtungskörper 56 zwar relativ zur Kettenhülse 26, nicht jedoch relativ zur Kettenlasche 18 und dem damit fest verbundenen Kettenbolzen 22 drehbeweglich ist. Der radiale Schenkel 62 des Dichtungskörpers 56 weist mehrere gleichmäßig auf seinen Umfang verteilte, axial nach außen gerichtete Vorsprünge 72 auf, die von der kreisringförmigen Grundfläche 36

der Vertiefung 12 einen axialen Abstand aufweisen, was auch für den Tragteilabschnitt 68 in bezug auf die Grundfläche 49 der Ringnut 50 gilt. Der Dichtungskörper 56 hat also im Normalfall eines unverschlissenen Distanzringes 44 Spielraum in beiden einander entgegengesetzten axialen Richtungen. Damit zwischen derjenigen Stelle 73 des Dichtungskörpers 56, an welcher der gerade Abschnitt 66 des Tragteiles 58 in dessen gekrümmten Abschnitt 68 übergeht, einerseits und der radial inneren Innenfläche 54 der Ringnut 50 nur eine Berührung längs einer Kreislinie 74 erfolgt, weist diese Innenfläche einen sich axial nach außen verjüngenden konischen Abschnitt 76 auf, der an der Kreislinie 74 in einen sich axial nach innen erstreckenden zylindrischen Abschnitt 78 der radial inneren Innenfläche 54 glatt übergeht. Der Kreislinie 74 liegt die dynamische Dichtlippe 70 ungefähr radial gegenüber, welche die kreiszylindrische radial äußere Innenfläche 52 der Ringnut 50 so berührt, daß das freie Ende des gekrümmten Tragteilabschnittes 68 diese Innenfläche nicht tangiert, wenn der axiale Schenkel 64 des Dichtungskörpers 56 an seiner Dichtlippe 70 und der zuvor bezeichneten Stelle 73 seines Tragteiles 58 von den Innenflächen 52 und 54 der Ringnut 50 elastisch eingeklemmt ist, wobei aber längs der Kreislinie 74 eine sozusagen metallische Berührung zwischen Dichtungskörper und Kettenhülse 26 besteht. Im Falle eines endseitigen Verschleißes des Distanzringes 44 auf der axial gegenüberliegenden Seite des Kettengelenkes, welche spiegelbildlich zu Fig. 1 zu denken ist, rückt die Grundfläche 49 der Ringnut 50 von dem gekrümmten Tragteilabschnitt 68 weg, wobei sich die dynamische Dichtlippe 70 und die Stelle 73 des Übergangs der Tragteilabschnitte 66 und 68 ineinander relativ axial nach außen zu den Rändern der Ringnut 50 hin bewegen. Infolgedessen gleitet der Tragteil 58 die Kreislinie 74 verlassend über den konischen Innenflächenabschnitt 76 axial nach außen, wenn sich die Kettenhülse 26 mit der fest verbundenen Kettenlasche 30 in Fig. 1 nach rechts bewegt. Offensichtlich ist dabei stets gewährleistet, daß sich der Tragteil 58 des Dichtungskörpers 56 und die radial innere Innenfläche 54 der Ringnut 50 lediglich längs einer (wandernden) Kreislinie berühren, sodaß der eine Einheit darstellende Dichtungskörper stets um diese Kreislinie bezüglich der Bolzenachse 38 ein wenig kippbar ist, ohne daß die dynamische Abdichtung darunter leidet. Gesetzt den Fall, der in Fig. 1 gezeigte Distanzring 44 sei endseitigem Verschleiß unterworfen: dann rückt zunächst die Grundfläche 49 der Ringnut 50 dem gekrümmten Tragteilabschnitt 68 bis zur gegenseitigen Berührung näher (weshalb es besser wäre, den zylindrischen Innenflächenabschnitt 78 durch eine Verlängerung des konischen Innenflächenabschnittes 76 axial nach innen zu ersetzen), worauf die Kettenhülse 26 den ganzen Dichtungskörper 56 axial nach außen schiebt, bis dessen Dichtteilvorsprünge 72 an seinem radialen Schenkel 62 an der Grundfläche 36 der Vertiefung 12 anschlagen. Spätestens ab diesem Zeitpunkt besteht die Gefahr, daß die Stirnfläche 32 der axial inneren Kettenlasche 30 die Stirnfläche 14 der axial äußeren Kettenlasche 18 berührt und das Kettengelenk allmählich zerstört würde, weshalb vorher der verschlissene Distanzring 44 und erforderlichenfalls auch der Dichtungskörper 56 auszuwechseln ist.

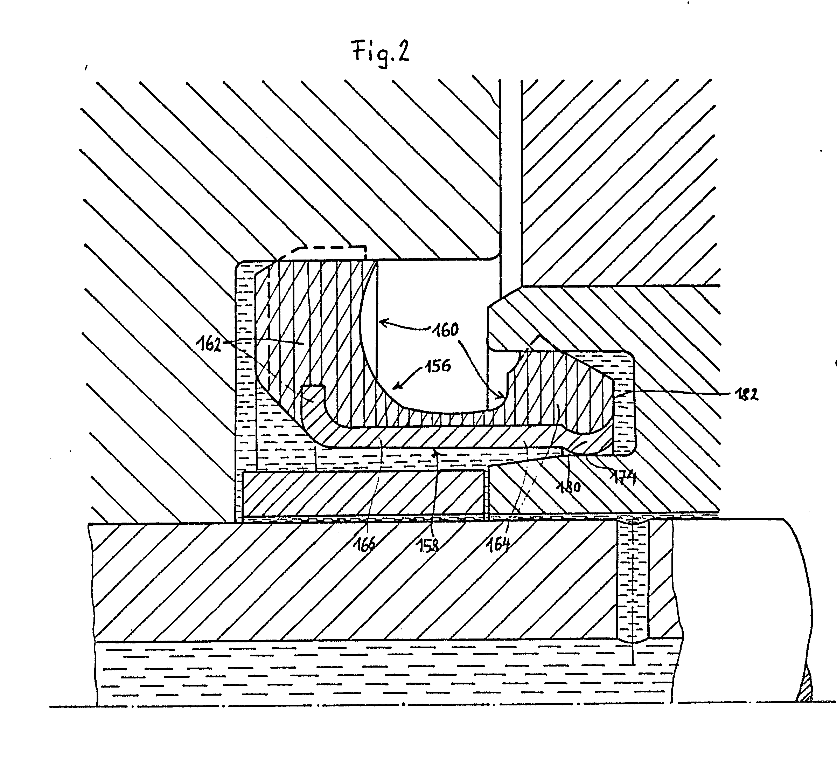

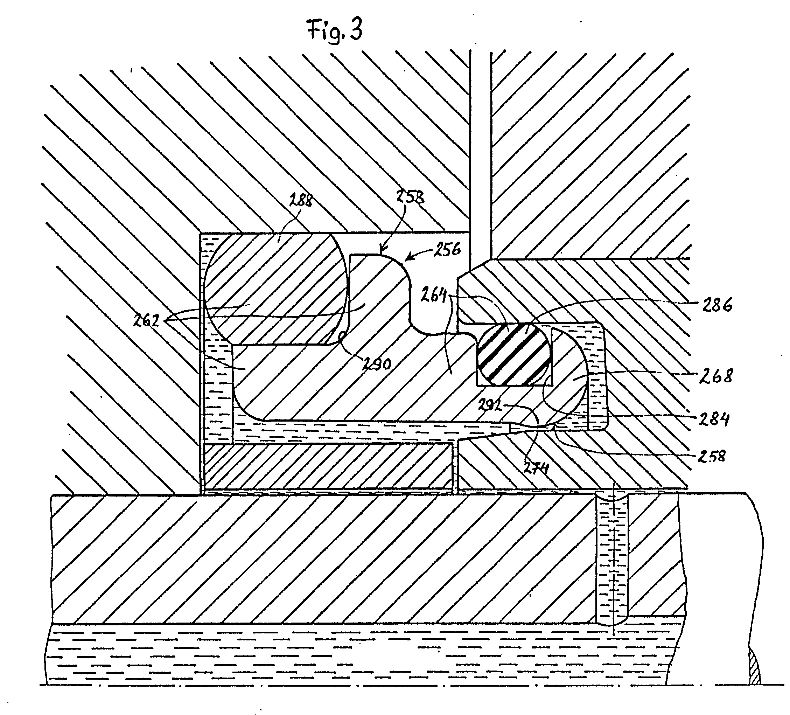

Im zweiten Ausführungsbeispiel unterscheidet sich der Dichtungskörper 156 gemäß Fig. 2 insofern vom Dichtungskörper 56, als sein hauptsächlich kreiszylindrischer Abschnitt 166 mit seinem schon dem radialen Schenkel 162 angehörenden axial äußeren Ende rechtwinklig in den Dichtteil 160 hineingebogen ist, sodaß der Tragteil 158 dort fest verankert ist, und als sein axial vorderes Ende anstelle des gekrümmten Tragteilabschnittes 68 eine radial nach innen vorspringende Sicke 180 bildet, welche mit einer axial inneren, planen Stirnfläche 182 des Dichtteiles 160 bündig abschließt und die radial innere Innenfläche 54 der Ringnut 50 wiederum längs einer Kreislinie 174 berührt. Im übrigen und wesentlichen gleicht der Dichtungskörper 156 dem Dichtungskörper 56.

Im dritten Ausführungsbeispiel besteht der Dichtungskörper 256 aus einem flachen, L-förmig profilierten, ringförmigen Tragteil 258, dessen in die Ringnut 50 eingreifender axialer Abschnitt 268 eine radial nach außen offene rechteckige Nut 284 aufweist, die einen O-Ring 286 als dynamischen Dichtteil des Dichtungskörpers aufnimmt, welcher unter Abflachung an der radial äußeren Innenfläche 52 der Ringnut 50 anliegt; und aus einem zweiten, statischen Dichtteil in Form eines größeren O-Ringes 288, der in einer rechtwinkligen Eckausnehmung 290 sitzt und sowohl radial außen wie axial außen über den Tragteil 258 vorsteht, wobei sich wiederum infolge Übermaßes ein Preßsitz des O-Ringes 288 in der Umfangsfläche 40 der Vertiefung 12 ergibt. An seinen axialen Enden berührt der Dichtungskörper 258 die Grundfläche 49 der Ringnut 50 und die Grundfläche 36 der Vertiefung 12 nicht. Axial innen erfolgt die gegenseitige Berührung zwischen der radial inneren Innenfläche 54 der Ringnut 50 und dem axialen Schenkel 268 des Tragteiles 258 über eine an diesem radial nach innen vorspringende Abrundung 292, die dem O-Ring 286 ungefähr radial gegenüberliegt.

Anstelle der Eckausnehmung 290 könnte eine der Nut 284 entsprechende Nut vorgesehen sein. Gegebenenfalls ginge aber die axiale Pufferwirkung des O-Ringes 288 verloren.

- . -

des Distanzringes (44) angeordnet ist und daß der Trag- sowie der Dichtteil (58; 158; 258 bzw. 60; 160; 286 und 288) des Dichtungskörpers (56; 156; 256) mit dessen dynamisch abdichtendem Schenkel (64; 164; 264) die radial innere bzw. äußere der beiden Innenflächen (54 und 52) der Ringnut (50) berührt bzw. beaufschlagt.

3.) Dichtungsanordnung nach Anspruch 1 oder 2, dadurch gekennzeichnet, daß derTragteil (58; 158) des Dichtungskörpers (56; 156) ein J- oder angenähert U-förmiges Querschnittsprofil aufweist, wobei sein axial inneres Ende eine Krümmung (68) bzw. Abwinklung besitzt, die das axial innere Ende des dynamisch abdichtenden Dichtteiles (60; 160) an dessen axial innerer Seite abstützt.

4.) Dichtungsanordnung nach Anspruch 3, dadurch gekennzeichnet, daß der Tragteil (158) an seinem axial äußeren Ende eine Abwinklung (Fig. 2) besitzt, die in die axial äußere, radial innere Ecke des statisch dichtenden Dichtteiles (160) eingreift.

5.) Dichtungsanordnung nach einem der Ansprüche 1 bis 4, dadurch gekennzeichnet, daß der statisch abdichtende Dichtteil (60) des Dichtungskörpers (56) mit auf seinen Kreisumfang verteilten Vorsprüngen (72) axial nach außen versehen ist, die der kreisförmigen Grundfläche (36) der Vertiefung (12) gegenüberstehen.

6.) Dichtungsanordnung nach Anspruch 1 oder 2, dadurch gekennzeichnet, daß der Tragteil (258) des Dichtungskörpers (256) zwei umlaufende, zumindest radial offene Nuten (284 und 290) zur Aufnahme je eines O-Ringes (286 bzw. 288) als Dichtteilen des Dichtungskörpers (256) aufweist.

7.) Dichtungsanordnung nach einem der Ansprüche 1 bis 6, dadurch gekennzeichnet, daß der Trag- und der Dichtteil (58; 158; 258 bzw. 60; 160; 286 und 288) des Dichtungskörpers (56; 156; 256) aus Metall bzw. aus einem elastomeren Kunststoffmaterial besteht.

- . -

PATENTANWALT DIPL.-PHYS. M. WOLFF

0185336

European Patent Attorney

Reg.-Nr. 200 155

Kirchheimer Straße 69
D-7000 Stuttgart 75
Fed. Rep. of Germany

Telefon: (0-711) 47 76 74

Telegrammadresse:
marketpatius stuttgart

Parker-Prädifa GmbH,
Bietigheim-Bissingen (Baden-Württ.)

## D i c h t u n g s a n o r d n u n g
### für Spurkettengelenke von Kettenfahrzeugen

14. Dezember 1984/

## P a t e n t a n s p r ü c h e

1.) Dichtungsanordnung für Spurkettengelenke an Kettenfahrzeugen, bei denen vier paarweise nebeneinander angeordnete, sich paarweise überlappende Kettenlaschen (18 und 30) sowie eine die im Überlappungsbereich axial innenliegenden Laschenenden (28) fest verbindende Kettenhülse (26) und ein die im Überlappungsbereich axial außenliegenden Kettenglieder fest verbindender, koaxialer Kettenbolzen (22) ein Kettengelenk bilden, das aus einer mit Schmiermittel füllbaren Bohrung (46') im Bolzen (22) über eine radiale Bohrung (48') im Bolzen (22) schmierbar ist, wobei jede im Überlappungsbereich außenliegende Lasche (18) auf ihrer Innenseite eine kreiszylindrische Vertiefung (12) zur Aufnahme einer Dichtung und eines auf dem aus der Hülse (26) herausragenden Bolzenende (20) sitzenden starren Distanzringes (44) aufweist, wobei der in einer radialen Ebene liegenden Grundfläche (36) der Vertiefung (12) eine normalerweise in einer parallelen Ebene liegende Stirnfläche (42) der der Vertiefung (12) benachbarten Kettenhülse (26) gegenüberliegt und wobei zwei sich überlappende Laschen (18 und 30) einen

BLZ 600 901 00, Konto-Nr 4 553 950, Stuttgarter Bank
Mündliche Auskünfte und Aufträge bedurfen schriftlicher Bestätigung

Ringspalt (34) bilden, der den von der Vertiefung (12) und der ihr axial gegenüberliegenden Stirnfläche (42) begrenzten Hohlraum (10) radial öffnet; mit einem ringförmigen Dichtungskörper (56; 156; 256) im wesentlichen L-förmigen Profils, dessen zwei Schenkel (62 und 64; 162 und 164; 262 und 264) zur statischen bzw. dynamischen Abdichtung der zwischen Distanzring (44) einerseits sowie Grundfläche (36) der Vertiefung (12) bzw. Stirnfläche (42) der Kettenhülse (26) andererseits bestehenden Ringspalte (46 und 48) unter Haft- bzw. Gleitreibschluß an der zylindrischen Umfangsfläche (40) der Vertiefung (12) bzw. an der Kettenhülse (26) anliegt, dadurch gekennzeichnet, daß der Dichtungskörper (56; 156; 256) eine ausschließlich radial dichtende, axial bewegliche, kippbare Einheit aus einem starren Tragteil (58; 158; 258) und mindestens einem elastischen Dichtteil (60; 160; 286 und 288) bildet und mit axialem Spiel zwischen der kreisringförmigen Grundfläche (36) der Vertiefung (12) und der kreisringförmigen Grundfläche (49) einer in die Stirnfläche (42) der Kettenhülse (26) versenkten, den dynamisch abdichtenden Schenkel (64; 164; 264) des Dichtungskörpers (56; 156; 256) aufnehmenden Ringnut (50) mit zwei einander radial gegenüberliegenden Innenflächen (52 und 54) angeordnet ist; und daß der Tragteil (58; 158; 258) des Dichtungskörpers (56; 156; 256) eine (54) der beiden Innenflächen (52 und 54) der Ringnut (50) im wesentlichen nur längs einer Kreislinie (74; 174; 274) berührt, während an einer dieser ungefähr radial gegenüberliegenden Stelle des Dichtungskörpers (56; 156; 256) dessen dynamisch abdichtender Dichtteil (60; 160; 286) die andere (52) der beiden Innenflächen (52 und 54) beaufschlagt; wobei der statisch abdichtende Schenkel (62; 162; 262) des Dichtungskörpers (56; 156; 256) mit dessen statisch abdichtendem Dichtteil (60; 160; 288) an der zylindrischen Umfangsfläche (40) der Vertiefung (12) angreift.

2.) Dichtungsanordnung nach Anspruch 1, dadurch gekennzeichnet, daß die Ringnut (50) in der Kettenhülse (26) radial außerhalb

Fig.1

Fig.2

Fig. 3

0185336